Europäisches Patentamt

European Patent Office

Office européen des brevets

(19)

(11) Numéro de publication: **0 619 801 B1**

## (12) FASCICULE DE BREVET EUROPEEN

(45) Date de publication du fascicule du brevet: **20.09.95**

(51) Int. Cl.6: **C04B 41/89**, C04B 41/86

(21) Numéro de dépôt: **93911658.8**

(22) Date de dépôt: **30.12.92**

(86) Numéro de dépôt internationale :
**PCT/FR92/01245**

(87) Numéro de publication internationale :
**WO 93/13033 (08.07.93 93/16)**

(54) **PROCEDE POUR LA PROTECTION CONTRE L'OXYDATION DE PRODUITS EN MATERIAU COMPOSITE CONTENANT DU CARBONE, ET PRODUITS OBTENUS PAR LE PROCEDE.**

(30) Priorité: **30.12.91 FR 9116321**

(43) Date de publication de la demande:
**19.10.94 Bulletin 94/42**

(45) Mention de la délivrance du brevet:
**20.09.95 Bulletin 95/38**

(84) Etats contractants désignés:
**BE DE ES FR GB IT SE**

(56) Documents cités:
**EP-A- 0 375 537**
**WO-A-88/07506**
**GB-A- 812 740**

**Chemical Abstracts, vol. 108, no. 22, mai 1988, (Columbus, Ohio, US), voir page 311, abrégé no. 191634r, JP,A,6323036 (SHOWA DENKO K.K.) 30 janvier 1988, voir abrégé**

(73) Titulaire: **SOCIETE EUROPEENNE DE PROPULSION**
**24, rue Salomon de Rothschild**
**F-92150 Suresnes (FR)**

(72) Inventeur: **TAWIL, Henri Nouveau Longchamp**
**34, avenue Léon-Blum**
**F-33110 Le Bouscat (FR)**
Inventeur: **BERNARD, Xavier Domaine de la Bourgade**
**ARSAC**
**F-33460 Margaux (FR)**
Inventeur: **CAVALIER, Jean-Claude**
**Chemin Molinier-Louens**
**F-33290 Le Pian Medoc (FR)**

(74) Mandataire: **Joly, Jean-Jacques et al**
**Cabinet Beau de Loménie**
**158, rue de l'Université**
**F-75340 Paris Cédex 07 (FR)**

Ceramic Engineering and Science Proceedings, vol. 10, nos. 9-10, Octobre 1989,US; G.
PALAVIT et al.: "Oxidation protective coating
for polycrystalline carbon",page 1425

**Description**

La présente invention concerne la protection anti-oxydation de produits en matériau composite contenant du carbone.

Les matériaux composites dits thermostructuraux sont utilisés pour la réalisation de pièces devant montrer un bon comportement thermomécanique, en particulier dans les domaines spatial, aéronautique et du freinage. Ces matériaux sont formés par un renfort fibreux réfractaire, par exemple en carbone ou en céramique, densifié par une matrice, par exemple également en carbone ou en céramique.

Pour des applications impliquant un séjour des pièces à température élevée en milieu oxydant, les composites à matrice céramique peuvent être préférés aux composites à matrice carbone en raison de la mauvaise tenue du carbone à l'oxydation.

Une protection anti-oxydation reste toufefois nécessaire pour les composites à matrice céramique lorsque ceux-ci contiennent du carbone. Il en est ainsi dans le cas de composites de type carbone-céramique dont le renfort fibreux est en carbone tels que les composites C-SiC (carbone -carbure de silicium). Il en est également ainsi dans le cas de composites de type céramique-céramique, par exemple SiC-SiC (carbure de silicium - carbure de silicium) comprenant une couche d'interphase en carbone entre les fibres et la matrice comme décrit dans le document FR-A-2 567 874.

La protection anti-oxydation des composites thermostructuraux a donné lieu à de nombreux travaux.

Une solution connue consiste à former sur la pièce en matériau composite un revêtement résistant à l'usure et à l'oxydation, généralement un revêtement en carbure de silicium (SiC) réalisé par dépôt chimique en phase vapeur.

Il est toutefois en pratique impossible de réaliser un tel revêtement externe sans qu'apparaissent des défauts soit au moment de la fabrication (défauts en forme de trous d'épingle), soit au cours de l'utilisation du produit (fissuration). Le matériau composite n'est alors pas parfaitement isolé du milieu oxydant ambiant.

Pour remédier à ces défauts, il a été proposé de réaliser un revêtement supplémentaire en un matériau tel qu'un verte de type silicate, borate ou borosilicate qui, par son passage à l'état pâteux à partir d'une certaine température, vient colmater les trous et fissures du revêtement SiC.

Une autre solution connue consiste à procurer une protection de type interne par dépôt de bore en phase vapeur au sein de la porosité résiduelle du matériau composite, comme décrit dans le brevet US 4 582 751. En effet, le renfort fibreux du matériau composite a une porosité initiale qui, en pratique, n'est qu'incomplètement obturée par le matériau de la matrice. Il subsiste une porosité accessible non seulement en surface, mais aussi au sein du matériau, permettant la formation d'une protection interne.

Une protection anti-oxydation de type interne pour un matériau de friction en composite C-C (carbone-carbone) est aussi décrite dans le document JP-A-63/023.036. La protection interne est obtenue par imprégnation par une solution aqueuse de phosphate d'aluminium et le chauffage à 700° C en atmosphère non oxydante.

L'utilisation du phosphate d'aluminium pour la formation d'un revêtement protecteur contre l'oxydation est bien connue. Ainsi, le document GB-A-812 740 divulgue déjà un procédé de protection de graphite contre l'oxydation par du dioxyde de carbone, en particulier pour du graphite utilisé comme modérateur dans un réacteur nucléaire refroidi au dioxyde de carbone, utilisant une composition de revêtement sous forme d'un ciment réfractaire contenant de la poudre de graphite et un liant dérivé d'une solution de phosphate d'aluminium additionnée de kaolin, silice, alumine et/ou autres oxydes réfractaires.

Enfin, dans le but d'améliorer encore la protection contre l'oxydation, il est proposé dans le document FR-A-2 640 619 de réaliser une protection interne par imprégnation de la porosité résiduelle du matériau composite par une solution liquide d'un silicate alcalin. L'imprégnation est suivie par une phase de séchage puis une phase de traitement thermique qui a un effet de nappage pour former sur les surfaces des pores ouverts du matériau composite un revêtement de protection interne constituant un résidu réfractaire inoxydable et autocicatrisant. Le matériau composite comportant la protection interne peut être muni d'un revêtement de protection externe réfractaire en particulier en carbure de silicium. Le revêtement externe est formé à la surface du produit ainsi que dans la porosité résiduelle ouverte, au moins à proximité de la surface, amenant ainsi un effet de blocage de la protection interne.

L'invention a pour but de fournir un nouveau procédé d'obtention d'une protection anti-oxydation au moyen d'une composition qui laisse un résidu réfractaire inoxydable présentant les caractéristiques requises, notamment d'auto-cicatrisation. Par auto-cicatrisation, on entend ici la faculté qu'a le résidu réfractaire de former une protection exempte de défaut du fait de son ramollissement dans un certain domaine de température. L'invention a aussi pour but de fournir une protection anti-oxydation insensible à l'eau.

Ce but est atteint, conformément à l'invention, du fait que l'on forme sur la surface céramique d'un produit en matériau composite à protéger, un revêtement externe à partir d'une composition contenant principalement un mélange de phosphates, de silice et d'alumine appartenant à un système $P_2O_5$ - $SiO_2$ - $Al_2O_3$, et, après séchage, l'on réalise un traitement thermique à une température au moins suffisante pour transformer le revêtement externe en un ciment insoluble susceptible de former ensuite un verte auto-cicatrisant.

La composition formée essentiellement du mélange de phosphates, d'alumine et de silice est mise en place sur une surface externe céramique du matériau composite. Dans le cas d'un matériau composite à matrice céramique, cette surface externe est formée par la partie superficielle de la matrice. Il en est de même dans le cas d'un matériau composite à matrice mixte carbone/céramique, la phase céramique de la matrice étant à l'extérieur. Dans le cas d'un matériau composite à matrice carbone, il est nécessaire de former préalablement une couche de revêtement externe en céramique, par exemple en carbure de silicium.

Le revêtement externe est avantageusement formé par pistolettage ou par application au pinceau de la composition en suspension dans un liquide tel que l'eau. Il est donc aisé à mettre en oeuvre et pénêtre facilement dans la porosité de surface du produit, ce qui favorise l'ancrage de la protection externe.

Après transformation du revêtement externe en ciment, le produit peut rester en l'état, le ciment procurant une protection efficace. L'invention vise aussi un tel produit en matériau composite protégé. La transformation du ciment en un verte auto-cicatrisant se produit alors pendant l'utilisation du produit lorsque la température à laquelle il est exposé atteint le point de ramollissement.

Il est toutefois envisageable de transformer le ciment en verte déjà au stade de fabrication du produit.

On notera, à la différence du revêtement décrit dans le document GB-A-812 740 déjà cité, que le revêtement externe est ici un ciment destiné à former un verte, et non pas un ciment réfractaire qui ne doit pas normalement subir de transformation jusqu'à sa température d'utilisation.

Un avantage du procédé selon l'invention tient au fait que le revêtement de protection externe ainsi réalisé est insoluble dans l'eau.

Outre le mélange de phosphates, de silice et d'alumine, et l'eau, la composition peut en outre comprendre divers oxydes réfractaires, notamment des oxydes alcalins, tels que oxyde de sodium, oxyde de potassium, de l'oxyde de bore et des oxydes métalliques tel que l'oxyde de zinc. L'ajout de certains oxydes, notamment d'alcalino-terreux permet d'ajuster la plage de température à l'intérieur de laquelle le verte formé par la protection externe présente un état visqueux apte à assurer la fonction d'auto-cicatrisation.

Le mélange de phosphates, de silice et d'alumine ($P_2O_5$ - $SiO_2$ - $Al_2O_3$) représente la partie principale de la composition du revêtement, de préférence entre 50 % et 90 % en poids de cette composition. Dans ce mélange, $P_2O_5$ est de préférence majoritaire par rapport à $SiO_2$ + $Al_2O_3$, le rapport en poids entre $P_2O_5$ et $SiO_2$ + $Al_2O_3$ étant compris par exemple entre 1 et 1,3. De préférence encore, les quantités en poids entre ces trois principaux constituants sont telles que le rapport entre $SiO_2$ et $Al_2O_3$ est compris entre 0,6 et 1, le rapport entre $SiO_2$ et $P_2O_5$ est compris entre 0,35 et 0,45 et le rapport entre $Al_2O_3$ et $P_2O_5$ est compris entre 0,40 et 0,55. Bien que minoritaire dans le verte auto-cicatrisant obtenu par exposition à la chaleur, c'est $SiO_2$ qui impose le système vitreux ; on obtient donc ce que l'on appelle un verte inverse de silice. Par rapport aux vertes de phosphates connus, un verte de silice en protection externe a un comportement amélioré en raison de sa plus grande stabilité en température et de la moindre sensibilité à l'humidité.

Les différents oxydes ajoutés représentent de préférence entre 10 % et 50 % en poids de la composition, dont entre 10 % et 30 % en poids d'oxydes alcalins.

La quantité d'eau ajoutée est ajustée en fonction de la viscosité désirée pour l'utilisation de la suspension.

Selon un mode préféré de mise en oeuvre de l'invention, avant formation du revêtement externe de protection anti-oxydation, il est réalisé une imprégnation du produit à coeur, au sein de la porosité résiduelle ouverte du matériau composite, par une solution liquide d'au moins un phosphate alcalin. Après séchage, un traitement thermique effectué à une température suffisante permet de napper les surfaces des pores ouverts du matériau composite par un revêtement de protection interne réfractaire, inoxydable et auto-cicatrisant. Ce traitement thermique de nappage (vitrification) peut être effectué immédiatement après imprégnation du produit et séchage, avant formation du revêtement externe. Il est également possible de former le revêtement externe après imprégnation et séchage du produit, sans traitement thermique intermédiaire, le nappage des surfaces des pores étant réalisé par traitement thermique après formation du revêtement externe.

Avantageusement, l'imprégnation à coeur est effectuée par une solution liquide de phosphates de sodium et de potassium, ce qui, après le traitement thermique de nappage, donne une protection interne peu sensible à l'eau. En outre, cette protection interne a une température de ramollissement relativement peu élevée, ce qui accroît l'efficacité de la protection globale dans une plage de température allant d'environ 400° C à environ 600° C.

Dans la solution utilisée pour l'imprégnation à coeur du produit, les quantités respectives de phosphate de sodium et de phosphate de potassium sont dans une proportion comprise de préférence entre 4/1 et 2/1. La quantité d'eau ajoutée est ajustée en fonction de la viscosité désirée pour l'utilisation de la solution.

L'imprégnation est réalisée au moins d'abord sous vide par immersion du produit dans un bain de la solution liquide de phosphates, à l'intérieur d'une enceinte dans laquelle règne une pression réduite, par exemple environ 30 torrs ($4.10^3$ N/m²). L'immersion est poursuivie pendant plusieurs dizaines de minutes, par exemple environ 1 heure. La phase d'imprégnation sous vide peut être suivie d'une phase d'imprégnation sous pression visant à parfaire l'incorporation de la solution à coeur du produit, au sein de la porosité accessible du matériau composite.

L'efficacité de la protection anti-oxydation apportée par le procédé conforme à l'invention est montrée par les exemples décrits ci-après.

Il sera fait référence aux dessins annexés sur lesquels :

- la figure 1 montre l'évolution de la variation de masse relative de matériaux composites en fonction du nombre de cycles de vieillissement sous air à température élevée auxquels les matériaux sont soumis, et
- les figures 2 et 3 illustrent les variations de contraintes appliquées à des pièces en matériau composite soumises à des tests de tenue à l'oxydation à température élevée sous sollicitation mécanique.

Les exemples ci-après concernent tous des produits en matériaux composites à matrice céramique, et plus précisément à matrice SiC, lesquels sont plus particulièrement destinés à des utilisations à températures relativement élevées qui constituent un domaine privilégié d'application du procédé conforme à l'invention. De tels matériaux présentent généralement une porosité ouverte résiduelle de l'ordre de 10 % en volume.

## Exemple 1

Un produit en matériau composite de type C–SiC est réalisé par mise en oeuvre d'un procédé comprenant les étapes suivantes :

- formation d'une préforme, ou structure de renfort fibreux, par empilement de couches de tissu en fibres de carbone,
- infiltration en phase vapeur d'un revêtement intermédiaire de pyrocarbone sur les fibres des couches de tissus maintenues dans un outillage, et
- infiltration en phase vapeur d'une matrice de carbure de silicium au sein de la porosité de la préforme munie du revêtement d'interphase pyrocarbone.

Un tel procédé est décrit en détail dans le brevet FR 841 11591 (publication No 2 567 874).

Le produit est soumis à un traitement de protection anti-oxydation comprenant une première phase d'imprégnation sous vide au moyen d'une solution liquide de phosphates de sodium et de potassium comprenant 30 % de phosphate de sodium, et 10 % en poids de phosphate de potassium, le reste étant de l'eau. L'imprégnation est réalisée par immersion du produit dans un bain de cette solution sous une pression d'environ 30 torrs ($4.10^3$ N/m²) pendant environ 1 heure. Après retour a la pression atmoshérique, égouttage et séchage, le produit est soumis à un traitement thermique de plusieurs heures en atmosphère neutre ($N_2$), consistant en une élévation progressive de la température jusqu'à une valeur comprise entre 350° C et 950° C, suivie d'un palier à cette température, avant retour à la température ambiante, de manière à réaliser un "nappage" (vitrification) du revêtement interne et à le rendre peu sensible à l'eau.

Conformément à l'invention, un revêtement externe de protection anti-oxydation est ensuite formé par pistolettage ou application au pinceau d'une composition liquide contenant un mélange de phosphates, de silice et d'alumine en suspension dans l'eau. En l'espèce, la composition comprend en outre divers oxydes et est constituée par 35 % en poids de $P_2O_5$, 30% en poids de silico-alumineux, 20 % en poids d'oxydes alcalins, 2 % en poids d'oxyde de bore $B_2O_3$, 6 % en poids d'oxydes métalliques et 7 % d'eau (quantité d'eau contenue dans la composition à l'état initial et qui peut être mesurée par perte au feu).

Après séchage du produit à 100° C, celui-ci est soumis à un traitement thermique intermédiaire à une température d'environ 250° C pendant 1 h., ce qui donne naissance à un revêtement externe sous forme de ciment insoluble dans l'eau. Le ciment est obtenu par condensation des chaînes polyphosphatées et non par des liaisons hydrauliques pures. Ce revêtement externe est solidement ancré dans la porosité de surface du produit, l'application par pistolettage ou au pinceau et le caractère liquide de la composition ayant favorisé la pénétration de celle-ci dans la porosité de surface.

Bien que le produit soit utilisable en l'état, il est procédé dans cet exemple à un traitement thermique supplémentaire à une température plus élevée, comprise entre 800° C et 1000° C (par exemple environ égale à 900° C), et en atmosphère neutre (par exemple sous azote), pour provoquer la fusion du ciment et sa transformation en un verte auto-cicatrisant. On notera qu'il est possible d'atteindre directement ce stade, sans étape intermédiaire de traitement thermique modéré.

Le produit en matériau composite ainsi obtenu comprend une protection interne, nappant la surface des pores internes initialement accessibles dans le matériau composite, et une protection externe nappant la surface du produit.

Des échantillons du produit protégé ont été soumis à des cycles successifs de vieillissement à l'air comprenant chacun une élévation de la température jusqu'à 600° C, le maintien à cette température pendant 4 heures, une diminution de la température jusqu'à 450° C, le maintien à cette température pendant 18 heures, et le retour à température ambiante (cycle C).

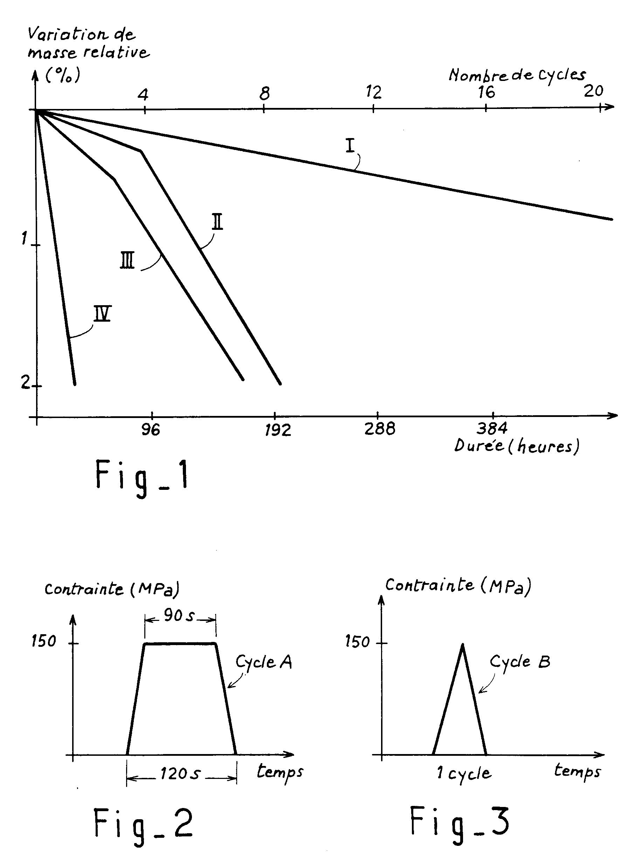

La courbe I de la figure 1 illustre la variation de la perte de masse mesurée sur les échantillons en fonction du nombre de cycles de vieillissement subis, les échantillons ayant été plan dans de l'eau bouillante pendant 1 heure avant cycles de vieillissement sous air.

Des échantillons de produit muni seulement de la protection interne ont été placés dans l'eau bouillante pendant 1 heure puis soumis aux mêmes cycles C de vieillissement sous air. La courbe II de la figure 1 illustre la variation de la perte de masse mesurée en fonction du nombre de cycles.

## Exemple 2

Il est procédé comme dans l'exemple 1 à l'exception de la formation de la protection interne.

Des échantillons du produit obtenu, muni seulement de la protection externe sont soumis au même test de vieillissement cyclique (cycles C) que dans l'exemple 1.

La courbe III de la figure 1 illustre la variation de la perte de masse mesurée sur les échantillons du produit tel qu'obtenu, en fonction du nombre de cycles de vieillissement. Les mêmes résultats sont obtenus que les échantillons aient été ou non placés dans de l'eau bouillante pendant 1 heure avant vieillissement cyclique, ce que montre l'insensibilité à l'eau de la protection externe.

A titre de comparaison, la courbe IV de la figure 1 illustre la variation de perte de masse mesurée sur des échantillons du produit en matériau composite de départ dépourvu de protection anti-oxydation.

La figure 1 illustre l'excellente efficacité de la protection anti-oxydation apportée par le revêtement externe associé au revêtement interne (courbe I).

## Exemple 3

Un produit en matériau composite C-SiC est réalisé comme décrit dans l'exemple 1 avec protection interne et protection externe contre l'oxydation. Après immersion dans l'eau bouillante pendant 1 heure, la tenue du produit à l'oxydation est évaluée par un test de vieillissement à l'air effectué sur des éprouvettes soumises à une contrainte en flexion 4 points, sous une charge de 150 MPa, pour des durées de 100 ou 200 heures et sous une température de 450° C ou 600° C. La valeur résiduelle, après vieillissement, de la résistance en flexion $R_F$ est ensuite mesurée à température ambiante.

Les résultats obtenus sont indiqués dans le tableau I. Est également indiquée la valeur initiale de résistance en flexion à température ambiante du produit non protégé. A titre de comparaison, le même test effectué sur une éprouvette du produit en matériau composite non protégé a conduit à la rupture de l'éprouvette au bout de 40 heures.

Tableau I

| Protection interne | Protection externe | Vieillissement sous air sous contrainte | | | Observation | $R_F$ (MPa) |
|---|---|---|---|---|---|---|
| | | T(°C) | Contrainte (MPa) | Durée (h) | | |
| non | non | ---- | ---- | ---- | | 270 |
| non | non | 450 | 150 | 40 | rupture | ---- |
| oui | oui | 450 | 150 | 100 | pas de rupture | 260 |
| oui | oui | 450 | 150 | 200 | pas de rupture | 260 |
| oui | oui | 600 | 150 | 100 | pas de rupture | 260 |

Du tableau I, il ressort à l'évidence l'efficacité de la protection anti-oxydation.

Exemple 4

Un produit en matériau composite C-SiC est réalisé comme décrit dans l'exemple 1 avec protection interne et externe contre l'oxydation.

La tenue du produit à l'oxydation est évaluée par un test d'oxydation à l'air effectué sur des éprouvettes soumises à des sollicitations mécaniques cycliques à une température de 450° C, 600° C ou 680° C, et pour différents nombres de cycles. Les cycles consistent en l'application d'une contrainte en traction de 100 MPa alternée avec une contrainte en compression de 100 MPa, à l'exception d'un essai où le cycle comprend l'application d'une contrainte en traction de 15 MPa suivie d'une autre contrainte en traction de 150 MPa. La fréquence des cycles est de 2 Hz ou 9 Hz. La valeur résiduelle, après vieillissement, de la résistance en traction $R_T$ est ensuite mesurée après retour à la température ambiante.

Les résultats obtenus sont indiqués dans le tableau II. Est également indiquée la valeur initiale de résistance en traction à température ambiante du produit non protégé. A titre de comparaison, le même test a été effectué sur une éprouvette du produit en matériau composite muni d'une protection interne et d'une protection externe comme décrit dans le document FR-A-2 640 619. La rupture de l'éprouvette a été observée au bout de $2.10^4$ cycles.

## Tableau II

| Protection interne | Protection externe | Oxydation sous sollicitation mécanique | | | | Observa-tion | $R_T$ (MPa) |
|---|---|---|---|---|---|---|---|
| | | T(°C) | Contrainte traction (+) compression (−) | Fréqu-ence (Hz) | Nombre de cycles | | |
| non | non | | | | | | 350 |
| selon FR–A–2 640 619 | | 600 | +100 MPa −100 MPa | 2 | $2.10^4$ | rupture | – – – – – |
| oui | oui | 450 | +100 MPa −100 MPa | 2 | $5.10^5$ | pas de rupture | 340 |
| oui | oui | 600 | +100 MPa −100 Mpa | 2 | $1,6.10^5$ | pas de rupture | 340 |
| oui | oui | 680 | + 100 MPa − 100 MPa | 9 | $10^6$ | pas de rupture | 350 |
| oui | oui | 450 | + 15 MPa +150 MPa | 9 | $10^6$ | pas de rupture | 360 |

Le tableau II, comme le tableau I, témoigne de l'efficacité de la protection anti-oxydation réalisée.

Exemple 5

Un produit en matériau composite SiC-SiC à interphase pyrocarbone est réalisé par mise en oeuvre d'un procédé comprenant les étapes suivantes :
- formation d'une préforme, ou structure de renfort fibreuse, par empilement de couches de tissu en fibres essentiellement en carbure de silicium telles que les fibres commercialisées sous la dénomination "Nicalon" par la société japonaise Nippon Carbon Co.,
- infiltration en phase vapeur d'un revêtement intermédiaire d'interphase en pyrocarbone sur les fibres de la préforme maintenue dans un outillage, et
- infiltration en phase vapeur d'une matrice de carbure de silicium au sein de la porosité de la préforme munie du revêtement d'interphase en pyrocarbone.

Le produit est ensuite soumis à un traitement de protection contre l'oxydation comme décrit dans l'exemple 1 (protection interne et protection externe).

La tenue du produit à l'oxydation est évaluée par des tests d'oxydation à l'air effectués sur des éprouvettes soumises à des cycles de fatigue en fluage (cycle A) ou en traction (cycle B) à des températures de 500° C ou 850° C pour différents nombres de cycles. La valeur résiduelle de la résistance en traction $R_T$ est ensuite mesurée à température ambiante.

Comme le montre la figure 2, le cycle A de fatigue mécanique en fluage comprend l'application d'une contrainte en traction de 150 MPa pendant une durée de 90 s, la contrainte croissant de la valeur 0 à la valeur 150 MPa de façon uniforme au début du cycle pendant 15 s et décroissant en fin de cycle de façon uniforme jusqu'à la valeur 0 en 15 s également.

Comme le montre la figure 3, le cycle B de fatigue mécanique en traction consiste en l'application d'une "impulsion" de contrainte en traction de valeur maximale égale à 150 MPa, la fréquence des cycles étant de 20 Hz.

Les résultats obtenus sont indiqués dans le tableau III. Est également indiquée la valeur initiale de la résistance en traction mesurée sur un échantillon du produit non protégé. A titre de comparaison, des mêmes tests effectués sur des éprouvettes du produit protégé selon le procédé du document FR-A-2 640 619 ont conduit à des ruptures au bout de 50 cycles A, à 850° C, de 100 cycles A, à 550° C et de $10^3$ cycles B à 850° C.

Tableau III

| Protection interne | Protection externe | Oxydation sous sollicitation mécanique | | | | Observation | $R_T$(MPa) |
|---|---|---|---|---|---|---|---|
| | | Cycle | T(°C) | Nombre de cycles | Durée (h) | | |
| non | non | ----- | ----- | ----- | ----- | ----- | 200 |
| selon FR-A-2 640 619 | | A | 550 | 100 | 3 | rupture | ----- |
| selon FR-A-2 640 619 | | A | 850 | 50 | 1,5 | rupture | ----- |
| oui | oui | A | 550 | 2700 | 87 | pas de rupture | 200 |
| oui | oui | A | 850 | 2700 | 87 | pas de rupture | 200 |
| selon FR-A-2 640 619 | | B | 850 | $10^3$ | 0,01 | rupture | ----- |
| oui | oui | B | 850 | $1,7.10^6$ | 23 | pas de rupture | 200 |

Exemple 6

Dans le but d'évaluer la plage d'efficacité de la protection anti-oxydation telle que définie dans les exemples précédents, un produit en matériau composite SiC-SiC est réalisé comme dans l'exemple 5. Il est muni d'une protection anti-oxydation interne comme dans l'exemple 1 et d'une protection externe formée par application de deux couches au pinceau ou par pistolettage. La première couche est réalisée à partir de la solution d'imprégnation (solution liquide de phosphates de sodium et de potassium) utilisée pour la protection interne. La deuxième couche est réalisée à partir de la composition formée principalement d'un mélange de phosphates, de silice et d'alumine, utilisée pour réaliser la protection externe dans l'exemple 1.

L'épaisseur totale des deux couches est comprise entre 50 et 100 microns

La tenue du produit ainsi protégé est évaluée par un test d'oxydation à l'air effectué sur des éprouvettes soumises à des cycles de fatigue identiques au cycle A de l'exemple 5 (figure 2), à des températures de 450° C et 1100° C pour différents nombres de cycles. La valeur résiduelle de la résistance en traction $R_T$ est ensuite mesurée à température ambiante sur les éprouvettes non rompues.

Les résultats obtenus sont indiqués dans le tableau IV. A titre de comparaison, un même test effectué à 450° C sur une éprouvette du produit protégé selon le procédé du document FR-A-2 640 619 a conduit à la rupture de l'éprouvette au bout de 400 cycles ; à 1100° C, la rupture se produit au bout de 150 cycles.

Tableau IV

| Protection interne | Protection externe | Oxydation sous sollicitation mécanique | | | | Observation | $R_T$(MPa) |
|---|---|---|---|---|---|---|---|
| | | Cycle | T(°C) | Nombre de cycles | Durée (h) | | |
| non | non | | | | | ----- | 200 |
| selon FR-A-2 640 619 | | A | 450 | 400 | 12 | rupture | ----- |
| oui | oui | A | 450 | 2700 | 87 | pas de rupture | 200 |
| selon FR-A-2 640 619 | | A | 1100 | 150 | 4,5 | rupture | ----- |
| oui | oui | A | 1100 | 1720 | 55 | rupture | ----- |

Les tableaux III et IV montrent l'efficacité de la protection contre l'oxydation sur des produits en matériau composite SiC-SiC à interphase pyrocarbone.

La dernière ligne du tableau IV indique une rupture de l'éprouvette de produit protégé. Toutefois, cette rupture se produit sous une température très élevée et pour un nombre de cycles supérieur d'un facteur 10 en comparaison avec le produit protégé selon le document FR-A-2 640 619.

**Revendications**

1. Procédé pour la protection anti-oxydation d'un produit en matériau composite comprenant du carbone et présentant une surface céramique, au moyen d'au moins une composition liquide susceptible de laisser un résidu réfractaire inoxydable et auto-cicatrisant, procédé caractérisé en ce qu'il comprend au moins les étapes qui consistent à :
   - former sur la surface céramique du produit au moins un revêtement externe par une composition contenant principalement un mélange de phosphates, de silice et d'alumine appartenant à un système $P_2O_5$ - $SiO_2$ - $Al_2O_3$, et
   - après séchage, réaliser un traitement thermique à une température au moins suffisante pour transformer le revêtement externe en un ciment insoluble susceptible de former un verte auto-cicatrisant.

2. Procédé selon la revendication 1, caractérisé en ce que le revêtement externe est formé par pistolettage d'une suspension liquide contenant ledit mélange de phosphates, de silice et d'alumine.

3. Procédé selon la revendication 1, caractérisé en ce que le revêtement externe est formé par application au pinceau d'une suspension liquide contenant ledit mélange de phosphates, de silice et d'alumine.

4. Procédé selon l'une quelconque des revendications 1 à 3, caractérisé en ce que, dans le mélange de phosphates, de silice et d'alumine, le rapport en poids entre $SiO_2$ et $P_2O_5$ est compris entre 0,35 et 0,45, le rapport en poids entre $Al_2O_3$ et $P_2O_5$ est compris entre 0,40 et 0,55 et le rapport en poids entre $SiO_2$ et $Al_2O_3$ est compris entre 0,6 et 1.

5. Procédé selon l'une quelconque des revendications 1 à 4, caractérisé en ce que la composition contient en outre des oxydes réfractaires.

**6.** Procédé selon l'une des revendications 1 à 5, caractérisé en ce que le traitement thermique est poursuivi à une température supérieure pour transformer le ciment insoluble en verte auto-cicatrisant.

**7.** Procédé selon l'une quelconque des revendications 1 à 5, caractérisé en ce que le traitement thermique est réalisé à une température suffisante pour transformer le revêtement externe en verte auto-cicatrisant.

**8.** Procédé selon l'une quelconque des revendications 1 à 7, caractérisé en ce qu'il comprend, préalablement à la formation du revêtement externe, une étape qui consiste à imprégner le produit à coeur, au sein de la porosité résiduelle ouverte du matériau composite, par une solution liquide d'au moins un phosphate alcalin.

**9.** Procédé selon la revendication 8, caractérisé en ce qu'il comprend la réalisation d'un traitement thermique à une température suffisante pour que les surfaces des pores du matériau composite imprégné soient nappés par un revêtement de protection interne réfractaire, inoxydable et auto-cicatrisant.

**10.** Procédé selon l'une quelconque des revendications 8 et 9, caractérisé en ce que l'imprégnation du produit à coeur est effectuée par une solution liquide de phosphates de sodium et de potassium.

**11.** Produit en matériau composite contenant du carbone et protégé contre l'oxydation par un revêtement externe réfractaire et inoxydable, caractérisé en ce que le revêtement est constitué par un ciment insoluble dans l'eau formé à partir d'un mélange de phosphates, de silice et d'alumine.

**12.** Produit en matériau composite contenant du carbone et protégé contre l'oxydation par un revêtement externe vitreux auto-cicatrisant, caractérisé en ce que le revêtement est constitué par un verre inverse de silice formé à partir d'un mélange de phosphates, de silice et d'alumine.

**13.** Produit en matériau composite selon l'une quelconque des revendications 11 et 15, caractérisé en ce qu'il comprend en outre une protection interne contre l'oxydation formée à partir d'un mélange de phosphates de sodium et de potassium.

**Claims**

**1.** Method for providing protection against oxidation for a product made of a composite material containing carbon and having a ceramic surface, said protection being provided by at least one liquid composition capable of leaving a refractory residue that is non-oxidizing and self-healing, the method being characterized in that it comprises at least the steps consisting in:
   - forming on the ceramic surface of the product at least one external coating by means of a composition mainly containing a mixture of phosphates, of silica, and of alumina, and belonging to a $P_2O_5$ - $SiO_2$ - $Al_2O_3$ system; and
   - after drying, performing heat treatment at a temperature that is sufficient at least to transform the external coating into an insoluble cement capable of forming a self-healing glass.

**2.** Method according to claim 1, characterized in that the external coating is formed by spray-painting a liquid suspension containing said mixture of phosphates, of silica, and of alumina.

**3.** Method according to claim 1, characterized in that the external coating is formed by using a brush to apply a liquid suspension containing said mixture of phosphates, of silica, and of alumina.

**4.** Method according to any one of claims 1 to 3, characterized in that in the mixture of phosphates, of silica, and of alumina, the ratio by weight of $SiO_2$ over $P_2O_5$ lies in the range 0.35 to 0.45, the ratio by weight of $Al_2O_3$ over $P_2O_5$ lies in the range 0.40 to 0.55, and the ratio by weight of $SiO_2$ over $Al_2O_3$ lies in the range 0.6 to 1.

**5.** Method according to any one of claims 1 to 4, characterized in that the composition also contains refractory oxides.

6. Method according to any one of claims 1 to 5, characterized in that the heat treatment is continued at a higher temperature to transform the insoluble cement into a self-healing glass.

7. Method according to any one of claims 1 to 5, characterized in that the heat treatment is performed at a temperature that is sufficient to transform the external coating into a self-healing glass.

8. Method according to any one of claims 1 to 7, characterized in that prior to forming the external coating, it comprises a step that consists in impregnating the product to the core within the residual open pores of the composite material by means of a liquid solution of at least one alkali phosphate.

9. Method according to claim 8, characterized in that it includes implementing heat treatment at a temperature that is sufficient for the surfaces of the pores in the impregnated composite material to be lined with an internal protective coating that is refractory, non-oxidizing, and self-healing.

10. Method according to any one of claims 8 and 9, characterized in that the product is impregnated to the core by means of a liquid solution of phosphates of sodium and of potassium.

11. Product made of a composite material containing carbon and protected against oxidation by an external coating that is refractory and non-oxidizing, characterized in that the coating is constituted by a cement that is insoluble in water and that is formed on the basis of a mixture of phosphates, of silica, and of alumina.

12. Product made of a composite material containing carbon and protected against oxidation by a vitreous external coating that is self-healing, the product being characterized in that the coating is constituted by an inverse glass of silica formed on the basis of a mixture of phosphates, of silica, and of alumina.

13. Product made of composite material according to any one of claims 11 and 12, characterized in that it further includes internal protection against oxidation formed on the basis of a mixture of phosphates of sodium and of potassium.

**Patentansprüche**

1. Verfahren zum Antioxidationsschutz eines Produkts aus Verbundmaterial, bestehend aus Kohlenstoff und aufweisend eine keramische Oberfläche, mittels wenigstens einer flüssigen Zusammensetzung, die in der Lage ist, einen nichtoxidierbaren, hitzefesten und selbstheilenden Rückstand zu belassen, **gekennzeichnet durch** wenigstens die folgenden Schritte:
   - Bildung auf der keramischen Oberfläche des Produkts wenigstens eines äußeren Belages durch eine Zusammensetzung, die hauptsächlich ein Gemisch von Phosphaten und Silicium- und Aluminiumoxid enthalten, das dem System $P_2O_5$-$SiO_2$-$Al_2O_3$ angehört, und
   - nach Trocknung Durchführung einer Wärmebehandlung bei einer Temperatur, die wenigstens ausreicht, um den äußeren Belag in einen nicht löslichen Zement umzuwandeln, der ein selbstheilendes Glas bilden kann.

2. Verfahren nach Anspruch 1, **dadurch gekennzeichnet, daß** der äußere Belag durch Aufspritzen einer flüssigen Suspension gebildet wird, die das Phosphat- und Silicium und Aluminiumoxidgemisch enthält.

3. Verfahren nach Anspruch 1, **dadurch gekennzeichnet, daß** der äußere Belag durch Aufbringen mittels Pinsel einer flüssigen Suspension gebildet wird, die das Phosphat- und Silicium- und Aluminiumoxidgemisch enthält.

4. Verfahren nach Anspruch 1, **dadurch gekennzeichnet, daß** in den Phosphat- und Silicium- und Aluminiumoxidgemisch das Gewichtsverhältnis zwischen $SiO_2$ und $P_2O_5$ zwischen 0,35 und 0,45, das Gewichtsverhältnis zwischen $Al_2O_3$ und $P_2O_5$ zwischen 0,40 und 0,55 und das Gewichtsverhältnis zwischen $SiO_2$ und $Al_2O_3$ zwischen 0,6 und 1 liegt.

5. Verfahren nach einem der Ansprüche 1-4,
   **dadurch gekennzeichnet, daß**
   die Zusammensetzung außerdem hitzefeste Oxide enthält.

6. Verfahren nach einem der Ansprüche 1-5,
   **dadurch gekennzeichnet, daß**
   der Wärmebehandlung eine höhere Temperatur folgt, um den nichtlöslichen Zement in selbstheilendes Glas umzuformen.

7. Verfahren nach einem der Ansprüche 1-5,
   **dadurch gekennzeichnet, daß**
   die Wärmebehandlung bei einer Temperatur durchgeführt wird, die ausreicht, um den äußeren Belag in selbstheilendes Glas umzuformen.

8. Verfahren nach einem der Ansprüche 1-7,
   **dadurch gekennzeichnet, daß**
   vor der Bildung des äußeren Belags ein Schritt durchgeführt wird, der aus der Imprägnierung des Produkts im Kern innerhalb der offenen Rechtsporosität des Verbundmaterials durch einen flüssige Lösung wenigstens eines alkalischen Phosphats bestellt.

9. Verfahren nach Anspruch 8,
   **gekennzeichnet durch**
   die Durchführung einer thermischen Wärmebehandlung bei einer Temperatur, die ausreicht, daß die Oberfläche der Poren des imprägnierten Verbundmaterials mit einem inneren, hitzebeständigen, nichtoxidierbaren und selbstheilenden Schutzbelag überzogen werden.

10. Verfahren nach Anspruch 8 und 9,
    **dadurch gekennzeichnet, daß**
    die Imprägnierung des Produkts im Kern mittels einer flüssigen Natrium- und Kaliumphosphatlösung durchgeführt wird.

11. Produkt aus einem Verbundmaterial,
    enthaltend Kohlenstoff und oxidationsgeschützt durch einen äußeren, hitzefesten und nicht oxidierbaren Belag,
    **dadurch gekennzeichnet, daß**
    der Belag aus einem in Wasser nicht lösbaren Zement besteht, der auf der Grundlage eines Phosphat- und Silicium- und Aluminiumoxidgemischs gebildet ist.

12. Produkt aus einem Verbundmaterial,
    enthaltend Kohlenstoff und oxidationsgeschützt durch einen äußeren, glasartigen, selbstheilenden Belag,
    **dadurch gekennzeichnet, daß**
    der Belag aus einem inversen Quarzglas besteht, das auf der Grundlage eines Phosphat- und Silicium- und Aluminiumoxidgemisches gebildet wird.

13. Produkt aus einem Verbundmaterial nach Anspruch 11 oder 12,
    **dadurch gekennzeichnet, daß**
    es außerdem einen inneren Oxidationsschutz erhält, der auf der Grundlage eines Gemischs aus Natrium- und Kaliumphosphaten gebildet wird.

Fig_1

Fig_2

Fig_3